# EUROPEAN PATENT APPLICATION

(11) **EP 3 209 060 A1**
(43) Date of publication of application: **23.08.2017**
(21) Application number: 15851306.9
(22) Date of filing: 26.05.2015
(51) Int. Cl.: H04W 36/00

(54) **BEARER PROCESSING METHOD AND DEVICE**

(30) Priority: 16.10.2014 CN 201410550270
(71) Applicant: ZTE Corporation, Shenzhen, Guangdong 518057 (CN)
(72) Inventor: LIU, Lei, Shenzhen Guangdong 518057 (CN)
(74) Representative: Potter Clarkson LLP
(86) International application number: PCT/CN2015/079845
(87) International publication number: WO 2016/058384

(57) **Abstract**

Disclosed are a bearer processing method and device. The method comprises: acquiring, by a source base station, local Internet protocol access (LIPA) capability information about a target base station; judging, by the source base station, whether the target base station maintains an LIPA bearer where a terminal is activated according to the LIPA capability information; and managing, by the source base station, the LIPA bearer according to a judgement result. By means of the present invention, the problems in the prior art that a mobility decision cannot be performed in advance and mobility control cannot be performed on a handover request of an X2 link are solved, thus achieving the effect of saving resource consumption and signalling overheads.

## Description

### TECHNICAL FIELD

The present disclosure relates to the field of communication, and more particularly, to a bearer processing method and device.

### BACKGROUND

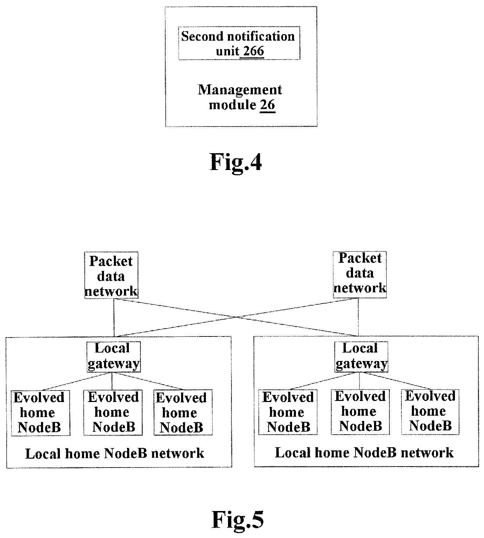

Local Internet protocol access (Local IP Access, referred to as LIPA) is a technology that allows a user equipment (referred to as "UE") to access the local network (home or enterprise network) through an evolved home NodeB (referred to as eHNB). The UE accessing the HeNB (home evolved NodeB) may access the local network through the local gateway (referred to as LGW), and the user data needs not to flow through the carrier core network. Fig. 5 shows a schematic diagram of the local home NodeB network according to the related art.

In the 3^{rd} Generation Partnership Project (referred to as 3GPP) R10 stage, the HeNB and the LGW are deployed on the same physical entity, and the mobility of the LIPA connection is not supported. That is, when the UE in the LIPA connection state is removed from the HeNB coverage area, the LIPA bearer will generally be released, and then the UE is allowed to switch to other target base stations (NodeBs).

In the 3GPP R11 stage, the HeNB and the LGW may be separate physical entities, and continuity of the LIPA connection in the local home NodeB network (Local H(e)NB Network, referred to as LHN) is supported. One LHN consists of a set of HeNBs. These HeNBs may obtain an IP connection to the local network through one or more LGWs. One HeNB can only belong to one LHN; and one LGW can only belong to one LHN. When the UE moves between HeNBs in the same LHN, it is needed to support the continuity of the LIPA connection. At this time, it is required that the LGW of the LIPA connection does not change.

At present, the LIPA mobility control is mainly performed by a HeNB gateway (referred to as GW) or a mobility management entity (referred to as MME). The disadvantage lies in that it is impossible to make a mobility decision in advance, the decision needs to be made after receiving a switch request message, and it is impossible to perform the mobility control on a switch request of an X2 link.

In the related art, there is no effective solution for solving the problems that the mobility decision cannot be made in advance and the mobility control cannot be performed on the switch request of the X2 link.

### SUMMARY

Embodiments of the present disclosure provide a bearer processing method and device for solving at least the problems in the related art that the mobility decision cannot be made in advance and the mobility control on the switch request of the X2 link cannot be performed.

According to one embodiment of the present disclosure, there is provided a bearer processing method, including: acquiring, by a source base station, Local Internet Protocol Access LIPA capability information of a target base station; determining, by the source base station, whether the target base station maintains a LIPA bearer that has been activated by a terminal according to the LIPA capability information; and managing, by the source base station, the LIPA bearer according to the determined result.

In the embodiments of the present disclosure, the managing, by the source base station, the LIPA bearer according to the determined result includes one of the following: when the determined result is NO and the terminal also supports a non-LIPA bearer, releasing, by the source base station, the LIPA bearer; and when the determined result is NO and the terminal only supports the LIPA bearer, informing the terminal, by the source base station, to move to the target base station.

In the embodiments of the present disclosure, after releasing the LIPA bearer by the source base station, the method further includes: switching the terminal to the target base station through the non-LIPA bearer.

In the embodiments of the present disclosure, the acquiring, by the source base station, the LIPA capability information of the target base station includes at least one of the following: acquiring the LIPA capability information through a sniffing function entity; acquiring the LIPA capability information through a measurement report of the target base station reported by the terminal; and acquiring the LIPA capability information through an X2 interface in a Long Term Evolution LTE protocol.

In the embodiments of the present disclosure, the acquiring, by the source base station, the LIPA capability information of the target base station includes: acquiring at least one of the following information of the target base station: an identity of a local network at which the target base station is located, an identity of a Local GateWay LGW to which the target base station is connected, and an address of the LGW to which the target base station is connected.

In the embodiments of the present disclosure, the determining, by the source base station, whether the target base station maintains the LIPA bearer that has been activated by the terminal according to the LIPA capability information includes: determining that the target base station maintains the LIPA bearer that has been activated by the terminal in at least one of the following cases: the identity of the local network of the source base station and the identity of the local network at which the target base station is located are consistent, the identity of the LGW to which the source base station is connected and the identity of the LGW to which the target base station is connected are consistent, and the address of the LGW to which the source base station is connected and the address of the LGW to which the target base station is connected are consistent; otherwise, determining that the target base station does not maintain the LIPA bearer that has been activated by the terminal.

In the embodiments of the present disclosure, the managing, by the source base station, the LIPA bearer according to the determined result further includes: when the determined result is YES, informing the terminal, by the source base station, to switch to the target base station through the LIPA bearer.

According to another embodiment of the present disclosure, there is also provided a bearer processing device, applied in a source base station, including: an acquisition module arranged to acquire Local Internet Protocol Access LIPA capability information of a target base station; a determination module arranged to determine whether the target base station maintains a LIPA bearer that has been activated by a terminal according to the LIPA capability information; and a management module arranged to manage the LIPA bearer according to the determined result.

In the embodiments of the present disclosure, the management module includes: a releasing unit arranged to, when the determined result is NO and the terminal also supports a non-LIPA bearer, release the LIPA bearer; and a first notification unit arranged to, when the determined result is NO and the terminal only supports the LIPA bearer, inform the terminal to move to the target base station.

In the embodiments of the present disclosure, the management module further includes: a second notification unit arranged to, when the determined result is YES, notify the terminal to switch to the target base station through the LIPA bearer.

In the embodiments of the present disclosure, the source base station acquires Local Internet Protocol Access LIPA capability information of a target base station; the source base station determines whether the target base station maintains a LIPA bearer that has been activated by a terminal according to the LIPA capability information; and the source base station manages the LIPA bearer according to the determined result. In this way, the problems in the related art that the mobility decision cannot be made in advance and the mobility control cannot be performed on the switching request of the X2 link are solved, and thereby achieving the effect of saving resource consumption and signaling overhead.

### BRIEF DESCRIPTION OF THE DRAWINGS

The drawings described herein are provided for a further understanding of the present disclosure, and form a part of this application. The illustrative embodiments of the present disclosure and the description are intended to explain the present disclosure and are not to be construed as limiting the present disclosure. In the drawings:
Fig. 1 is a flow chart of a bearer processing method according to an embodiment of the present disclosure;
Fig. 2 is a block diagram of a bearer processing device according to an embodiment of the present disclosure;
Fig. 3 is a first block diagram of the bearer processing device according to an embodiment of the present disclosure;
Fig. 4 is a second block diagram of the bearer processing device according to an embodiment of the present disclosure;
Fig. 5 is a schematic diagram of a local home NodeB network according to the related art;
Fig. 6 is a first flow chart of a bearer managing method supporting the LIPA mobility according to an alternative embodiment of the present disclosure;
Fig. 7 is a second flow chart of a bearer managing method supporting the LIPA mobility according to an alternative embodiment of the present disclosure;
Fig. 8 is a schematic diagram of a first method for collecting neighbor cell LIPA capability by a device for processing the LIPA bearer according to an alternative embodiment of the present disclosure;
Fig. 9 is a schematic diagram of a second method for collecting neighbor cell LIPA capability by the device for processing the LIPA bearer according to an alternative embodiment of the present disclosure;
Fig. 10 is a schematic diagram of a third method for collecting neighbor cell LIPA capability by the device for processing the LIPA bearer according to an alternative embodiment of the present disclosure; and
Fig. 11 is a schematic diagram of processing the mobility by the device for processing the LIPA bearer according to an alternative embodiment of the present disclosure.

### DETAILED DESCRIPTION

Hereinafter, the present disclosure will be described in detail with reference to the accompanying drawings. It is to be noted that the embodiments and the features in the embodiments in the present application may be combined with each other without conflict.

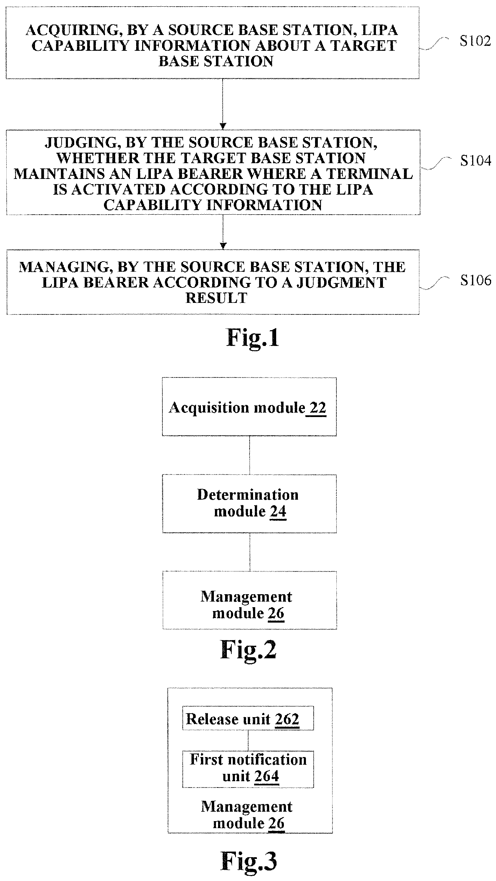

The present embodiment provides a bearer processing method. Fig. 1 is a flow chart of a bearer processing method according to an embodiment of the present disclosure. As shown in Fig. 1, the procedure includes the following steps.

In step S102, a source base station acquires LIPA capability information of a target base station.

In step S104, the source base station determines whether the target base station maintains a LIPA bearer that has been activated by a terminal based on the LIPA capability information.

In step S106, the source base station manages the LIPA bearer according to the determined result.

By the above steps, the source base station determines whether the acquired LIPA capability information of the target base station maintains the LIPA bearer that has been activated by the terminal, and then manages the LIPA bearer according to the determined result. Compared with the related art in which the mobility of the LIPA can be controlled only by acquiring a switch request (handover request) through an upper HeNB GW or MME of the source base station and mobility decisions cannot be made in advance, the above steps solve the problems in the related art that the mobility decision cannot be made in advance and the mobility control cannot be performed on the switch request of the X2 link, and thereby achieving the effect of saving resource consumption and signaling overhead. Herein, the target base station may be, but is not limited to, a neighbor cell base station of the source base station.

The above-described step S106 relates to managing the LIPA bearer by the source base station. It should be noted that the source base station may manage the LIPA bearer in a number of ways, which are illustrated below. In an alternative embodiment, when the source base station determines that the target base station does not support the LIPA bearer that has been activated by the terminal based on the LIPA capability information and the terminal also supports a non-LIPA bearer, such as a public bearer, the source base station releases the LIPA bearer, thereby saving the resource consumption and the signaling overhead. In another alternative embodiment, when the source base station determines that the target base station does not maintain the LIPA bearer that has been activated by the terminal based on the LIPA capability information and the terminal only supports the LIPA bearer, the source base station may directly select an optimal mobility algorithm, and notify the terminal to move to the target base station. In another alternative embodiment, when it is determined that the target base station supports the LIPA bearer that has been activated by the terminal, the source base station informs the terminal to switch to the target base station via the LIPA bearer.

The final purpose of the source base station to manage the LIPA bearer is to enable the terminal to successfully switch to the target base station. In an alternative embodiment, after the source base station releases the LIPA bearer, the terminal switches to the target base station through the non-LIPA bearer, and completes the switch of the terminal from the source base station to the target base station.

The above-mentioned step S102 relates to that the source base station acquires the local Internet protocol access LIPA capability information of the target base station, and the source base station may acquire the LIPA capability information of the target base station in a plurality of ways. In an alternative embodiment, the manners for the source base station to acquire the LIPA of the target base station includes at least one of the following: acquiring the LIPA capability information through a sniffing function entity; acquiring the LIPA capability information through a measurement report of the target base station reported by the terminal; and acquiring the LIPA capability information through an X2 interface in the long term evolution LTE protocol. The way for the source base station to acquire the LIPA capability information of the target base station may be selected flexibly according to actual conditions.

In an alternative embodiment, the source base station acquires the LIPA capability information of the target base station, which includes: acquiring an identity of a local network at which the target base station is located, an identity of a local gateway LGW to which the target base station is connected, and an address of the LGW to which the target base station is connected.

The step S104 relates to that the source base station determines whether the target base station maintains the LIPA bearer which has been activated by the terminal according to the LIPA capability information. In an alternative embodiment, in at least one of the following cases, it is determined that the target base station maintains the LIPA bearer that has been activated by the terminal: the identity of the local network of the source base station and the identity of the local network at which the target base station is located are consistent, the identity of the LGW to which the source base station is connected and the identity of the LGW to which the target base station is connected are consistent, and the address of the LGW to which the source base station is connected and the address of the LGW to which the target base station is connected are consistent; otherwise, it is determined that the target base station does not maintain the LIPA bearer that has been activated by the terminal.

The present embodiment also provides a bearer processing device for realizing the above-described embodiments and alternative embodiments. Herein, the contents which have been described are not repeated. As used herein, the term "module" may implement a combination of software and/or hardware of a predetermined function. Although the devices described in the following embodiments are alternatively implemented in software, the implementation of hardware, or a combination of software and hardware, is also possible and conceivable.

Fig. 2 is a block diagram of a bearer processing device according to an embodiment of the present disclosure. As shown in Fig. 2, the device is applied to a source base station, including: an acquisition module 22 arranged to acquire local Internet protocol access LIPA capability information of a target base station; a determination module 24 arranged to determine whether the target base station maintains a LIPA bearer which has been activated by a terminal according to the LIPA capability information; and a management module 26 arranged to manage the LIPA bearer according to the determination result.

Fig. 3 is a first block diagram of the bearer processing device according to the embodiment of the present disclosure. As shown in Fig. 3, the management module 26 includes: a release unit 262 arranged to, in the case where the determination result is NO, and the terminal also supports a non-LIPA bearer, release the LIPA bearer; and a first notification unit 264 arranged to, in the case where the determination result is NO and the terminal only supports the LIPA bearer, notify the terminal to move to the target base station.

Fig. 4 is a second block diagram of the bearer processing device according to the embodiment of the present disclosure. As shown in Fig. 4, the management module 26 further includes: a second notification unit 266 configured to, when the determination result is YES, notify the terminal to switch to the target base station via the LIPA bearer.

With respect to the above-mentioned problems in the related art, explanations will be given below in combination with an alternative embodiment. The alternative embodiment combines the above embodiments and their alternative embodiments.

The present alternative embodiment provides a bearer managing method and device supporting the LIPA mobility, which are used for deactivating the LIPA bearer when confirming that the LIPA mobility cannot be maintained and informing the UE as quickly as possible to move to the target base station.

The present alternative embodiment provides a bearer managing method when a terminal moves in a local IP access LIPA network, including:
when determining that a UE that needs to be switched has activated a LIPA bearer, a source side HeNB base station determines whether the LIPA bearer that has been activated by the UE can be maintained after switching according to collected neighbor cell LIPA capability support information; and
the source side HeNB releases the LIPA bearer after determining that the LIPA bearer cannot be maintained after switching. If the UE has only the LIPA bearer, the source side HeNB may directly select an optimal mobility algorithm (other than the switching) to directly inform the UE of moving to the target base station.

The present alternative embodiment provides a bearer managing device supporting the LIPA mobility, including: a receiving module, a determination module, and a release module.

By the receiving module (corresponding to the above acquisition module 22), the HeNB may obtain the LIPA support capability information of the neighbor cell base station through a sniffer or a similar sniffing function at the wireless side (an air interface protocol side); if the measurement report contains the LIPA support capability information of the neighbor cell base station, the HeNB may collect the information when receiving the measurement report; and the HeNB may also acquire the LIPA support capability information of the neighbor cell base station through the X2 interface (if the X2 interface exists).

By the determination module (corresponding to the above determination module 24), when determining that the UE needing to be switched has activated the LIPA bearer, the source side HeNB determines whether the LIPA bearer that has been activated by the UE can be maintained after being switched to the target base station.

By the release module (corresponding to the above release unit 262), the source side HeNB releases the LIPA bearer after determining that the LIPA bearer cannot be maintained after the switching. If the UE has only the LIPA bearer, the source side HeNB may directly select the optimal mobility algorithm (other than the switching) to directly inform the UE of moving to the target base station.

The method and device can solve three types of problems:
1. The source side HeNB can perform the LIPA switching decision in an X2 switching scenario, while other mobility control points (HeNB GW or MME, etc.) have no such capability;
2. The source side HeNB decides whether it is required to initiate the release of the LIPA bearer without the need of turning the decision over to an upper control point (HeNB GW or MME, etc.), thereby reducing signaling consumption and speeding up the release of the bearer;
3. When the source side HeNB believes that it is impossible to switch, all the bearers should be released, then other optimal mobility policies can be quickly selected to move the UE to the target terminal. If the decision is made after one switching preparation procedure, the resource consumption and signaling overhead will increase.

The technical solution of the present alternative embodiment may be applied to various communication systems, such as a General Packet Radio Service (referred to as GPRS), a Long Term Evolution (referred to as LTE) system, a LTE Frequency division Duplex (referred to as FDD) system, a LTE Time Division Duplex (referred to as TDD), a Universal Mobile Telecommunication System (referred to as UMTS), a Worldwide Interoperability for Microwave Access (referred to as WiMAX) communication system, a Code Division Multiple Access (referred to as CDMA) system, a Wideband Code Division Multiple Access (referred to as WCDMA) system, and a Global System of Mobile communication (referred to as GSM) system.

In the present alternative embodiment, the user equipment (referred to as UE) may be called as a terminal, a mobile station (referred to as MS), a mobile terminal, and etc. The UE may communicate with the core network via a radio access network (referred to as RAN). For example, the UE may be a mobile phone, a computer with a mobile terminal, and a portable/pocket/handheld/computer built-in/vehicle-mounted mobile device, and exchanges voice and/or data with a wireless access network.

It is to be understood that in the embodiments of the present disclosure, the device for processing the LIPA mobility bearer may be an Envolved Node B (referred to as ENB or e-NodeB) in the LTE, or a NodeB (referred to as NB) in WCDMA, or may be a Base Transceiver Station (referred to as BTS) in GSM or CDMA, which is not limited by the present alternative embodiment.

The present alternative embodiment may be applied to a heterogeneous network, and the home NodeB HeNB may be a macro base station in a macro cell or a micro base station in a micro cell (small cell). However, for the sake of convenience, the following embodiments are described by taking the home NodeB HeNB and the user equipment UE as an example. In addition, the term "and/or" herein merely describes an association of associated objects, and indicates that there may be three relationships, for example, A and/or B may indicate the following three conditions: A exists alone, A and B exist at the same time, and B exists alone. In addition, the character "/" herein generally indicates an "or" relationship between the associated objects in the context.

To make the purposes and technical solutions of this alternative embodiment clearer, the implementations of the present alternative embodiment will be described in further detail below with reference to the accompanying drawings.

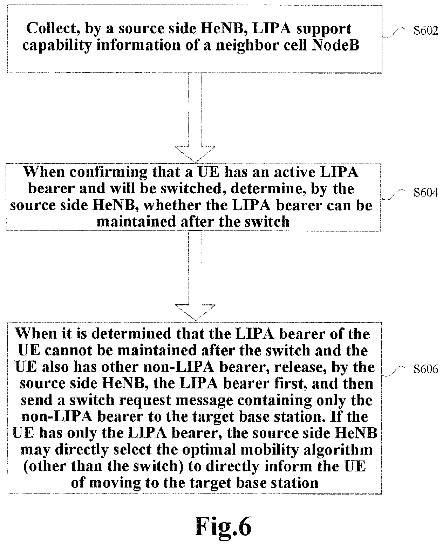

Fig. 6 is a first flow chart of a bearer managing method supporting the LIPA mobility according to an alternative embodiment of the present disclosure. As shown in Fig. 6, the bearer managing method supporting the LIPA mobility according to the alternative embodiment includes the following steps.

In step S602, a source side HeNB collects LIPA support capability information of a neighbor cell NodeB.

In step S604, when the source side HeNB confirms that a UE has an active LIPA bearer and will be switched, it determines whether the LIPA bearer can be maintained after the switch.

In step S606, when it is determined that the LIPA bearer of the UE cannot be maintained after the switch and the UE also has other non-LIPA bearer, the source side HeNB releases the LIPA bearer first, and then sends a switch request message containing only the non-LIPA bearer to the target base station. If the UE has only the LIPA bearer, the source side HeNB may directly select the optimal mobility algorithm (other than the switch) to directly inform the UE of moving to the target base station.

During implementation, the source side HeNB may collect the LIPA support capability information of the neighbor cell NodeB in a number of modes.

In mode 1, the source side HeNB obtains the LIPA capability information of the neighbor cell NodeB by a sniffer or other sniffing function.

In mode 2, the source side HeNB obtains the LIPA capability information of the neighbor cell NodeB from the neighbor cell measurement report information reported by the UE.

In mode 3, the source side HeNB obtains the LIPA capability information of the neighbor cell NodeB through an X2 interface (or other inter-NodeB interface) in the LTE protocol.

The context when the UE accesses or when the ERAB is dynamically established contains the LIPA bearer information. When determining that the UE meets the condition of switching and knowing that the UE contains the LIPA bearer at this time, the source side HeNB determines the LIPA support capability information of the neighbor cell NodeB.

The LIPA support capability information of the neighbor cell NodeB refers to at least one of an identity of the local network where the neighbor cell NodeB is located, an identity of the LGW to which the neighbor cell NodeB is connected, and an address of the LGW to which the neighbor cell NodeB is connected. When the source side HeNB obtains at least one of such information, it indicates that the neighbor cell NodeB supports the LIPA. If the neighbor cell does not support the LIPA, one or more of such information will not be broadcasted or passed through the interface to the requesting base station.

In step S606, the source side HeNB determines whether the target base station supports the mobility of the LIPA bearer, and may include determining whether the target base station has the same local network identifier as the present base station. If they are the same, the target base station supports the LIPA bearer; otherwise, the target base station does not support the LIPA bearer. The determination may also include determining the identity or address of the LGW to which the target base station is connected. If it is the same as the identity or address of the LGW to which the present base station is connected, the target base station supports the LIPA bearer; otherwise, the source side HeNB cannot make determination, and would turn it over to the core network nodes, such as HeNB GW and MME, for further determination. If it is determined that there is no the above LIPA-related identities in the collected target base station information, the source side HeNB confirms that the target base station does not support the mobility of the LIPA bearer.

When determining that the LIPA bearer of the UE cannot be maintained after the switch and the UE has other non-LIPA bearer, the source side HeNB releases the LIPA bearer first, and then send a switch request message containing only the non-LIPA bearer to the target base station. If the source side HeNB may sense and trigger the release of the LIPA bearer in time, the release will be performed more quickly. If the LIPA bearer release is triggered after the core network nodes, such as HeNB GW or MME, are aware of that the LIPA bearer is unsustainable after the switch, the release is relatively slow, and the signaling overhead and resource waste increase.

When the source side HeNB determines that the LIPA bearer of the UE cannot be maintained after the switch and the UE has only the LIPA bearer, the source side HeNB may directly select the optimal mobility algorithm (other than the switch) to directly notify the UE to move to the target base station. Similarly, if the decision is made by the core network nodes, such as HeNB GW or MME, the movement of the UE will delay, and the signaling overhead and resource waste will increase.

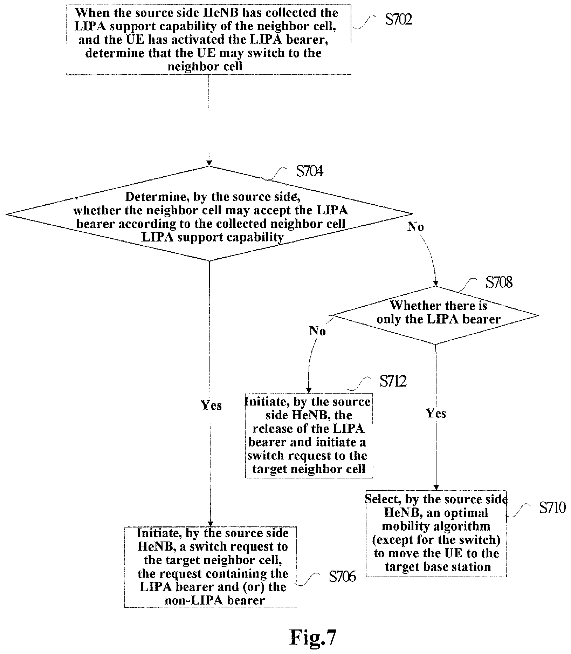

Fig. 7 is a second flow chart of a bearer managing method supporting the LIPA mobility according to an alternative embodiment of the present disclosure. As shown in Fig. 7, the procedure includes the following steps.

In step S702, when the source side HeNB has collected the LIPA support capability of neighbor cell base station, and the UE has activated the LIPA bearer, it is determined that the UE may switch to the neighbor cell base station.

In step S704, the source side HeNB determines whether the neighbor cell (base station) may accept the LIPA bearer according to the collected neighbor cell (base station) LIPA support capability. If the determination result is YES, step S706 is executed; and if the determination result is NO, step S708 is executed.

In step S706, the source side HeNB initiates a switch request to the target neighbor cell (base station), the request containing the LIPA bearer and (or) the non-LIPA bearer.

In step S708, it is determined whether there is only the LIPA bearer. If the determination result is YES, step S710 is executed; and if the determination result is NO, step S712 is performed.

Step S710, the source side HeNB selects an optimal mobility algorithm (except for the switch) to move the UE to the target base station.

In step S712, the source side HeNB initiates the release of the LIPA bearer and initiates a switch request to the target neighbor cell (base station).

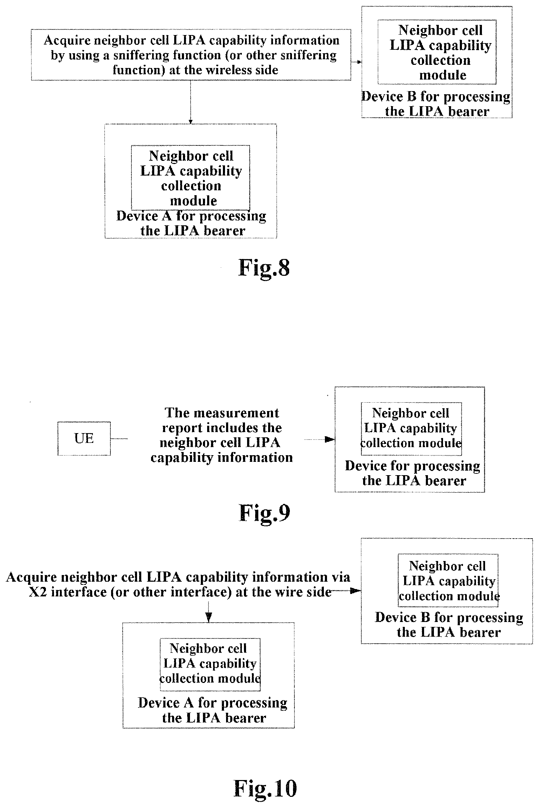

In the above, Fig. 6 to Fig. 7 illustrate the LIPA mobility bearer managing method according to the alternative embodiment of the present disclosure in detail. Hereinafter, a bearer managing device supporting the LIPA mobility according to an alternative embodiment of the present disclosure will be described in detail in conjunction with Figs. 8 to 11.

Figs. 8 to 10 show schematic diagrams of three methods of collecting the neighbor cell LIPA capability by the bearer managing device according to embodiments of the present disclosure.

Fig. 8 is a schematic diagram of a first method of collecting neighbor cell LIPA capability by a device for processing a LIPA bearer according to an alternative embodiment of the present disclosure. As shown in Fig. 8, the bearer management device includes one neighbor cell LIPA capability collection module (corresponding to the above acquisition module 22). The neighbor cell device may send out its LIPA supporting capability in a broadcast message. The source side device may obtain the LIPA support capability of the neighbor cell by a sniffer or other sniffing function at the wireless side. Similarly, the neighbor cell device may also acquire the LIPA capability of the source side device.

Fig. 9 is a schematic diagram of a second method of collecting neighbor cell LIPA capability by the device for processing the LIPA bearer according to an alternative embodiment of the present disclosure. As shown in Fig. 9, the bearer management device includes one neighbor cell LIPA capability collection module (corresponding to the above acquisition module 22). The measurement report information of the UE contains the LIPA support capability of the neighbor cell, and the source side HeNB obtains it and saves it.

Fig. 10 is a schematic diagram of a third method of collecting neighbor cell LIPA capability by the device for processing the LIPA bearer according to an alternative embodiment of the present disclosure. As shown in Fig. 10, the bearer management device includes one neighbor cell LIPA capability collection module (corresponding to the above acquisition module 22). If the bearer management device wants to request the LIPA support capability information of an opposite device, it may send a LIPA capability request message to the opposite device through an X2 interface (or similar interface in other systems) in the LTE protocol, and then the opposite device sends a response message. If the message contains at least one of an identity of a local network at which the opposite device is located, an identity of the connected LGW, and an address of the connected LGW, then it indicates that the opposite device supports the LIPA capability information; otherwise, it indicates that the opposite device does not support the LIPA capability information. The request-side bearer management device stores the neighbor cell LIPA support capability information.

Fig. 11 is a schematic diagram of processing mobility by the device for processing the LIPA bearer according to an alternative embodiment of the present disclosure. Fig. 11 shows a bearer management device supporting the LIPA mobility, which includes four modules: 1) a neighbor cell LIPA capability collection module; 2) a determination module; 3) a release module; and 4) a mobility module.

The neighbor cell LIPA capability collection module mainly collects the LIPA support capability of the neighbor cell by the above-mentioned method, and provides data support for the determination module.

When the determination module finds that the UE holds the activated LIPA bearer and the switch initiation condition is satisfied, the determination module determines whether the LIPA bearer can be maintained after the UE moves by comparing the LIPA support capability of the neighbor cell and that of the present base station.

When the determination module finds that the LIPA bearer of the UE cannot be maintained after the movement and the UE has other non-LIPA bearer, it informs the release module to initiate the release of the LIPA bearer, and the release module will execute the procedure.

When the determination module finds that the LIPA bearer cannot be maintained after the movement and the UE only has the LIPA bearer, it informs the mobility module to take other methods to move the UE to the target base station. The mobility module may select an optimal mobility method in addition to the switch to execute the procedure.

In summary, the embodiments of the present disclosure provide a scheme that supports early decision of LIPA mobility and supports X2 interface switch decision.

In several embodiments provided by the present application, it should be understood that the disclosed methods and devices may be implemented in other ways. For example, the above-described device embodiments are merely illustrative. For instance, the division of the unit is only a logical function division, and there may be other dividing ways during the actual implementation. For example, multiple units or components may be combined or may be integrated into another system, or some features may be ignored, or not executed. In addition, the coupling or communication connections shown or discussed may be either indirect coupling or communication connections through some interfaces, devices or units, or may be electrical, mechanical, or other forms of connection.

It will be apparent to those skilled in the art that the above-described modules or steps of the present disclosure may be implemented by a general purpose computing device which may be focused on a single computing device or distributed over a network consisting of multiple computing devices. Optionally, they may be implemented by program codes executable by the computing device so that they may be stored in a storage device to be executed by the computing device. In some cases, the shown or described steps may be performed in a different order, or may be implemented by separately making them into individual integrated circuit modules, or by making multiple modules or steps into a single integrated circuit module. Thus, the present disclosure is not limited to any particular combination of hardware and software.

The foregoing is merely implementation of the embodiments of the present disclosure. It should be noted that modifications and adaptations may be made by those skilled in the art without departing from the principles of the embodiments of the present disclosure. Such modifications and adaptations should be considered as the protection scope of the embodiments of the present disclosure.

### Industrial Applicability

The technical solutions provided by embodiments of the present disclosure may be applied to the bearer processing procedure. In the technical solutions, the source base station acquires local Internet protocol access LIPA capability information of the target base station, the source base station determines whether the target base station maintains the LIPA bearer that has been activated by the terminal according to the LIPA capability information, and the source base station manages the LIPA bearer according to the determined result. In this way, the problems in the related art that the mobility decision cannot be made in advance and the mobility control cannot be performed on the switching request of the X2 link are solved, and thereby achieving the effect of saving resource consumption and signaling overhead.

## Claims

1. A bearer processing method, comprising:
acquiring, by a source base station, Local Internet Protocol Access LIPA capability information of a target base station;
determining, by the source base station, whether the target base station maintains a LIPA bearer that has been activated by a terminal according to the LIPA capability information; and
managing, by the source base station, the LIPA bearer according to the determined result.

2. The method of claim 1, wherein the managing, by the source base station, the LIPA bearer according to the determined result comprises one of the following:
when the determined result is NO and the terminal also supports a non-LIPA bearer, releasing, by the source base station, the LIPA bearer; and
when the determined result is NO and the terminal only supports the LIPA bearer, informing the terminal, by the source base station, to move to the target base station.

3. The method of claim 2, wherein after releasing the LIPA bearer by the source base station, the method further comprises:
switching the terminal to the target base station through the non-LIPA bearer.

4. The method of claim 1, wherein the acquiring, by the source base station, the LIPA capability information of the target base station comprises at least one of the following:
acquiring the LIPA capability information through a sniffing function entity;
acquiring the LIPA capability information through a measurement report of the target base station reported by the terminal; and
acquiring the LIPA capability information through an X2 interface in a Long Term Evolution LTE protocol.

5. The method of claim 1, wherein the acquiring, by the source base station, the LIPA capability information of the target base station comprises: acquiring at least one of the following information of the target base station:
an identity of a local network at which the target base station is located, an identity of a Local GateWay LGW to which the target base station is connected, and an address of the LGW to which the target base station is connected.

6. The method of claim 5, wherein the determining, by the source base station, whether the target base station maintains the LIPA bearer that has been activated by the terminal according to the LIPA capability information comprises:
determining that the target base station maintains the LIPA bearer that has been activated by the terminal in at least one of the following cases: the identity of the local network of the source base station and the identity of the local network at which the target base station is located are consistent, the identity of the LGW to which the source base station is connected and the identity of the LGW to which the target base station is connected are consistent, and the address of the LGW to which the source base station is connected and the address of the LGW to which the target base station is connected are consistent; otherwise, determining that the target base station does not maintain the LIPA bearer that has been activated by the terminal.

7. The method of claim 1, wherein the managing, by the source base station, the LIPA bearer according to the determined result further comprises:
when the determined result is YES, informing the terminal, by the source base station, to switch to the target base station through the LIPA bearer.

8. A bearer processing device, applied in a source base station, comprising:
an acquisition module arranged to acquire Local Internet Protocol Access LIPA capability information of a target base station;
a determination module arranged to determine whether the target base station maintains a LIPA bearer that has been activated by a terminal according to the LIPA capability information; and
a management module arranged to manage the LIPA bearer according to the determined result.

9. The device of claim 8, wherein the management module comprises:
a releasing unit arranged to, when the determined result is NO and the terminal also supports a non-LIPA bearer, release the LIPA bearer; and
a first notification unit arranged to, when the determined result is NO and the terminal only supports the LIPA bearer, inform the terminal to move to the target base station.

10. The device of claim 8, wherein the management module further comprises:
a second notification unit arranged to, when the determined result is YES, notify the terminal to switch to the target base station through the LIPA bearer.
